# EUROPEAN PATENT APPLICATION

(11) **EP 3 424 583 A1**
(43) Date of publication of application: **09.01.2019**
(21) Application number: 17759491.8
(22) Date of filing: 25.01.2017
(51) Int. Cl.: B01D 53/04, B01J 20/26, C01B 3/38, H01M 8/0612

(54) **REMOVAL OF SULFUR COMPOUND FROM FLUID**

(30) Priority: 01.03.2016 JP 2016039071
(71) Applicant: Panasonic Corporation, Kadoma-shi, Osaka 571-8501 (JP); Kyoto University, Kyoto-shi, Kyoto 606-8501 (JP)
(72) Inventor: MORITA, Masashi, Osaka 540-6207 (JP); WAKITA, Hidenobu, Osaka 540-6207 (JP); NOMURA, Takaiki, Osaka 540-6207 (JP); HIGUCHI, Masakazu, Kyoto 606-8501 (JP); KITAGAWA, Susumu, Kyoto 606-8501 (JP)
(74) Representative: Grünecker Patent- und Rechtsanwälte PartG mbB
(86) International application number: PCT/JP2017/002559
(87) International publication number: WO 2017/150019

(57) **Abstract**

A method of the present disclosure is a method for removing a sulfide compound from a fluid including the sulfide compound, the method including bringing the fluid into contact with a metal-organic framework having a copper ion and an organic ligand. The present disclosure also provides a hydrogen generation apparatus (13) including a desulfurizer (16) and a reformer (18) connected to the desulfurizer (16) to generate hydrogen from a fuel treated by the desulfurizer (16). The desulfurizer (16) has a container (20) having an inlet (20a) and an outlet (20b) and a desulfurizing agent (22) filled in the container. The desulfurizing agent (22) includes a metal-organic framework having a copper ion and an organic ligand.

## Description

### TECHNICAL FIELD

The present invention relates to a technique for removing a sulfur compound from a fluid.

### BACKGROUND ART

A fuel cell cogeneration system (hereinafter, simply referred to as a "fuel cell system") having high power generation efficiency and overall efficiency has been receiving attention as a distributed power generator that makes it possible to use energy effectively. Many fuel cells use hydrogen as a fuel in power generation. However, a means for supplying hydrogen required by these fuel cells in power generation is generally not provided as infrastructure. This creates a need to generate hydrogen at a place where a fuel cell system is installed. Therefore, conventional fuel cell systems are often equipped with a hydrogen generation apparatus along with a fuel cell. For the hydrogen generation apparatus, for example, a steam reforming process, which is one of the hydrogen generation methods, is employed to generate hydrogen from a hydrocarbon fuel such as natural gas and liquefied petroleum gas (LPG).

Commercially-available fuel gases contain a concentration of a few ppm of a sulfur compound such as tertiary butyl mercaptan (TBM), dimethyl sulfide (DMS), and tetrahydrothiophene (THT) as an odorant in addition to a naturally occurring sulfur compound. Steam reforming catalysts are easily poisoned by sulfur compounds in general. For this reason, a desulfurizer is provided preceding a steam reformer. An adsorptive desulfurization process and hydrodesulfurization process are well-known as desulfurization processes. The adsorptive desulfurization process is a process in which adsorptive desulfurization is carried out at ordinary temperature, and requires periodic replacement of the desulfurizer. The hydrodesulfurization process is a process in which: a 200 to 350°C reformed gas exhausted from the hydrogen generation apparatus is recycled to the desulfurizer; the sulfur compound is hydrogenated with the hydrogen included in the reformed gas in the presence of a catalyst such as a CoMo-based catalyst; and the generated hydrogen sulfide is removed with, for example, zinc oxide. Superhigh-order desulfurization is also known in which the sulfur compound is hydrogenated at a temperature of 200 to 350°C and simultaneously sulfur is absorbed and removed using a CuZnO-based desulfurizing agent (for example, refer to Patent Literature 1).

### CITATION LIST

### Patent Literature

Patent Literature 1: JP 3242514 B2
Patent Literature 2: JP 2011-520592 A
Patent Literature 3: JP 2013-144284 A

### Non Patent Literature

[Non Patent Literature 1] S. Satokawa, Y. Kobayashi, H. Fujiki, Applied Catalysis B: Environmental 56 (2005) 51.
[Non Patent Literature 2] J. Ethiraj, F. Bonino, C. Lamberti, S. Bordiga, Microporous and Mesoporous Materials 207 (2015) 90.
[Non Patent Literature 3] S. Bashkova, A. Bagreev, T. J. Bandosz, Environ. Sci. Technol. 36 (2002) 2777.

### SUMMARY OF INVENTION

### Technical Problem

Although the adsorptive desulfurization process and hydrodesulfurization process are established desulfurization processes, they cannot remove sulfur compounds sufficiently or have difficulty in removing a certain sulfur compound. In addition, these processes can increase cost.

An object of the present disclosure is to provide a technique for easily and effectively removing a sulfur compound included in a fluid.

### Solution to Problem

That is, the present disclosure provides a method for removing a sulfide compound from a fluid including the sulfide compound, the method including bringing the fluid into contact with a metal-organic framework having a copper ion and an organic ligand.

### Advantageous Effects of Invention

According to the technique of the present disclosure, the sulfide compound included in the fluid can be removed easily and effectively.

### BRIEF DESCRIPTION OF DRAWINGS

FIG. 1 is a configuration diagram of a fuel cell system according to an embodiment.
FIG. 2 is a configuration diagram of a desulfurizer used in the fuel cell system of FIG. 1.
FIG. 3 is a diagram showing one aspect of an open metal site.
FIG. 4A is an X-ray diffraction diagram of HKUST-1 having yet to undergo a desulfurization test (Test 1).
FIG. 4B is an X-ray diffraction diagram of HKUST-1 having undergone the desulfurization test (Test 1).
FIG. 5 is a graph showing results of thermogravimetry (TG) and differential thermal analysis (DTA) of HKUST-1.
FIG. 6A is a graph showing a UV-Vis diffuse reflectance spectrum of HKUST-1 observed before the desulfurization test.
FIG. 6B is a graph showing a UV-Vis diffuse reflectance spectrum of HKUST-1 observed after the desulfurization test.
FIG. 7A is a graph showing XPS spectra (Cu2p) of HKUST-1 observed before and after the desulfurization test.
FIG. 7B is a graph showing XPS spectra (S2p) of HKUST-1 observed before and after the desulfurization test.
FIG. 8 is an X-ray diffraction diagram of HKUST-1 observed before and after a desulfurization test (Test 3).
FIG. 9A is a configuration diagram of a hydrogen generation apparatus according to a modification.
FIG. 9B is a configuration diagram of a hydrogen generation apparatus according to another modification.

### DESCRIPTION OF EMBODIMENTS

### (Findings on which the present disclosure is based)

In an adsorptive desulfurization process, a sulfur compound is adsorbed and removed at ordinary temperature by a zeolite including a transition metal such as Ag, Cu, and Mn. However, moisture in a fuel gas impairs the adsorption ability of the zeolite. Ag zeolite is used as a material that is less affected by the dew point of the fuel gas and that can effectively remove dimethyl sulfide (DMS) which is hard to adsorb (for example, refer to Non Patent Literature 1). Ag is, however, expensive.

In a hydrodesulfurization process, part of a reformed gas has to be recycled from a reformer to a desulfurizer while the temperature of a desulfurizing agent is kept at 200 to 350°C. These restrictions complicate the system configuration.

In order to solve these problems, a desulfurizing agent using a metal-organic framework (MOF, MIL-101) composed of Cr ions and benzene-1,4-dicarboxylic acid has been reported (for example, refer to Patent Literature 2). According to the method described in Patent Literature 2, however, the fuel gas needs to be pressurized to a pressure (1.4 MPa) far higher than the atmospheric pressure. In Patent Literature 3, a metal-organic framework supporting an Ag-based catalyst is described. This metal-organic framework is reported to show a high ability to remove hydrogen sulfide compared to Ag zeolite; however, a cost problem arising from the use of the Ag-based catalyst is left unsolved.

In an effort to solve the above problems, the present inventors have found that a sulfur compound included in a fluid (fuel) can be stably removed over a long period of time with the use of a MOF having a certain structure as a desulfurizing agent.

That is, a method according to a first aspect of the present disclosure is a method for removing a sulfide compound from a fluid including the sulfide compound, the method including bringing the fluid into contact with a metal-organic framework having a copper ion and an organic ligand.

According to the first aspect, the sulfide compound included in the fluid can be removed easily and effectively. The metal-organic framework can adsorb a sufficient amount of the sulfide compound over a long period of time, compared to the conventional desulfurizing agents.

In a second aspect of the present disclosure, for example, the sulfide for the method according to the first aspect is dimethyl sulfide. Mercaptans (R-SH, wherein R represents a saturated or unsaturated hydrocarbon group) such as methyl mercaptan and sulfides (R-S-R', wherein R and R' represent the same saturated or unsaturated hydrocarbon group or different saturated or unsaturated hydrocarbon groups) such as dimethyl sulfide are components included as odorants in a fuel gas such as city gas and LP gas. Removal of the components from the fuel gas allows the fuel gas to be used for various purposes (e.g., production of hydrogen). The technique of the present disclosure is effective in removing the sulfide compound, particularly dimethyl sulfide.

In a third aspect of the present disclosure, for example, the fluid for the method according to the first or second aspect further includes a hydrocarbon fuel. Removal of the sulfur compound from the hydrocarbon fuel allows the hydrocarbon fuel to be used for various purposes.

In a fourth aspect of the present disclosure, for example, the metal-organic framework for the method according to any one of the first to third aspects has a coordinatively unsaturated open metal site. Open metal sites can easily adsorb adsorbable molecules (sulfur compound). The coordinatively unsaturated open metal site shows higher activity.

In a fifth aspect of the present disclosure, for example, the organic ligand for the method according to any one of the first to fourth aspects has a carboxylate group and a benzene ring. Such an organic ligand can coordinate to a metal ion to form a metal-organic framework.

In a sixth aspect of the present disclosure, for example, the temperature of the metal-organic framework for the method according to any one of the first to fifth aspects is kept at 100°C or below. Keeping the temperature of the desulfurizing agent at 100°C or below can reduce desorption of the adsorbed molecules from the desulfurizing agent. The desulfurizing agent is also prevented from structural destruction caused by oxidative decomposition of the organic ligand.

In a seventh aspect of the present disclosure, for example, the fluid for the method according to any one of the first to sixth aspects is a fuel gas including a hydrocarbon fuel, and the fuel gas is not pressurized on a passage from a predetermined fuel gas supply source to a desulfurizer containing the metal-organic framework. According to the seventh aspect, a desulfurizer having a simple structure is usable. Energy needed for pressurization can be saved too.

In an eighth aspect of the present disclosure, for example, the method according to any one of the first to seventh aspects further includes heating the metal-organic framework to a temperature over 100°C and desorbing the sulfide compound adsorbed on the metal-organic framework from the metal-organic framework to recover the metal-organic framework. According to the eighth aspect, the adsorption ability of the metal-organic framework is regained, which substantially increases the adsorption amount.

A ninth aspect of the present disclosure includes:
a supply source of a fuel including dimethyl sulfide as an odorant;
a desulfurizer connected to the supply source; and
a reformer connected to the desulfurizer to generate hydrogen from the fuel treated by the desulfurizer, wherein
the desulfurizer has a container having an inlet and an outlet and a desulfurizing agent filled in the container, and
the desulfurizing agent includes a metal-organic framework having a copper ion and an organic ligand.

According to the ninth aspect, the same benefit as in the first aspect can be obtained.

In a tenth aspect of the present disclosure, for example, the fuel for the hydrogen generation apparatus according to the ninth aspect further includes a hydrocarbon gas, and the reformer is a device that generates hydrogen from the hydrocarbon gas by steam reforming. Removal of the sulfur compound from the fuel can reduce sulfur compound-induced poisoning of a steam reforming catalyst in the reformer.

In an eleventh aspect of the present disclosure, for example, the hydrogen generation apparatus according to the ninth or tenth aspect further includes a sulfur-containing gas exhaust passage branching from the container of the desulfurizer or branching from a passage connected to the outlet of the container of the desulfurizer. The sulfur compound can be desorbed from the desulfurizing agent and exhausted out of the hydrogen generation apparatus via the sulfur- containing gas exhaust passage.

A twelfth aspect of the present disclosure provides a fuel cell system including:
the hydrogen generation apparatus of the present disclosure; and
a fuel cell that generates electricity using hydrogen produced by the hydrogen generation apparatus.

According to the twelfth aspect, the same benefit as in the ninth aspect can be obtained.

Hereinafter, an embodiment of the present invention will be described with reference to the drawings. The present disclosure is not limited to the embodiment presented below.

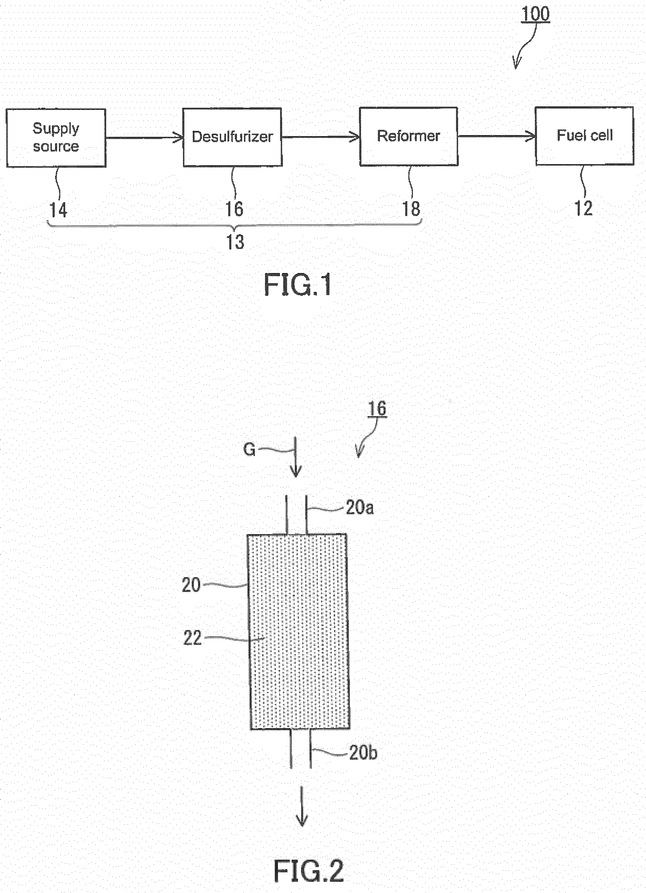

FIG. 1 is a configuration diagram of a fuel cell system according to the present embodiment. A fuel cell system 100 includes a fuel cell 12 and a hydrogen generation apparatus 13. The hydrogen generation apparatus 13 has a supply source 14, a desulfurizer 16, and a reformer 18. The supply source 14 serves to provide a fuel including a sulfur compound (excluding hydrogen sulfide) as an odorant. Specific examples of the supply source 14 are a fuel storage tank and city gas infrastructure. The desulfurizer 16 is a device for removing the sulfur compound included in the fuel from the fuel. The desulfurizer 16 is connected to the supply source 14 by a passage such as a pipe. The fuel is supplied to the desulfurizer 16 from the supply source 14. The reformer 18 is a device for generating hydrogen by a known steam reforming reaction (CH₄ + H₂O → CO + 3H₂). The reformer 18 contains a steam reforming catalyst for inducing the steam reforming reaction. The reformer 18 is connected to the desulfurizer 16 by a passage such as a pipe so that the fuel treated by the desulfurizer 16 is supplied to the reformer 18. The fuel cell 12 is connected to the hydrogen generation apparatus 13 by a passage such as a pipe so that the hydrogen generated by the hydrogen generation apparatus 13 is supplied to the fuel cell 12. Between the fuel cell 12 and the hydrogen generation apparatus 13, there may be devices such as a CO shift converter and CO remover for removing carbon monoxide.

The fuel to be supplied to the desulfurizer 16 is typically a hydrocarbon fuel. Removal of the sulfur compound from the hydrocarbon fuel allows the hydrocarbon fuel to be used for various purposes. The fuel is usually a gas and may be a liquid. Examples of the fuel are city gas, natural gas, ethane, propane, and liquefied petroleum gas (LP gas). A trace of an odorant is intentionally mixed in a commercially-available fuel gas such as city gas and LP gas in case of gas leakage. The component of the odorant, which depends on the gas supply company, is typically a sulfur compound such as TBM, DMS, and THT. The concentration of the odorant in the fuel gas is a few parts per million (ppm) at ordinary temperature (5 to 35°C). Removal of the odorant from the fuel gas can reduce poisoning of the steam reforming catalyst in the reformer 18.

As shown in FIG. 2, the desulfurizer 16 has a container 20 having an inlet 20a and outlet 20b. The container 20 is filled with a desulfurizing agent 22. The desulfurizing agent 22 is, for example, powder. In the present embodiment, the desulfurizing agent 22 includes a metal-organic framework (MOF) having copper ions and organic ligands. The desulfurizing agent 22 may consist only of the metal-organic framework or may include other components such as activated carbon. The metal-organic framework may be supported by a support made of a material such as ceramic, glass, carbon, and metal. The metal-organic framework as the desulfurizing agent 22 can be powder. The metal-organic framework may be formed of two or more types of organic ligands. The metal-organic framework possibly includes a metal ion (such as a Ni ion, Fe ion, and Co ion) other than the copper ion. The metal-organic framework powder desirably has a specific surface area (BET specific surface area) of, for example, 500 m²/g or more. The upper limit of the specific surface area of the metal-organic framework powder is, for example, but not particularly limited to, 7000 m²/g. The average particle diameter of particles (primary particles) of the metal-organic framework is not particularly limited and is, for example, in the range from several µm to several tens of µm. The average particle diameter can be calculated, for example, by the procedure described hereinafter. First, the metal-organic framework powder is observed with an electron microscope (SEM or TEM). The average area of any number of the particles (for example, 50 particles) of the metal-organic framework observed in an obtained SEM image or TEM image is calculated using an image processing technology. The diameter of a circle having an area equal to the calculated average area can be considered the average particle diameter of the particles of the metal-organic framework.

The metal-organic framework has a high specific surface area attributable to a uniform skeletal structure. The metal-organic framework is also called a porous coordination polymer (PCP). Properly selecting and combining an organic part (organic ligand) and inorganic part (metal ion) to construct the metal-organic framework enables close control of physical or chemical properties, such as the pore diameter, pore structure, and surface function, of the metal-organic framework. Compared to conventional desulfurizing agents such as zeolite, the metal-organic framework has a very high flexibility in design.

As explained previously, a desulfurizing agent using a metal-organic framework (MIL-101) composed of Cr ions and benzene-1,4-dicarboxylic acid has been reported. However, the fuel gas to be treated needs to be pressurized to a pressure (1.4 MPa) far higher than the atmospheric pressure. Moreover, the effect of adsorbing and removing sulfur compounds is small.

According to findings of the present inventors, the desulfurizing ability of the metal-organic framework used as a desulfurizing agent varies depending on the metal ion. The metal-organic framework used in the present embodiment has copper ions as its metal ion. The metal-organic framework having copper ions and organic ligands allows desulfurization without supply of hydrogen to the desulfurizer even at ordinary pressure. In addition, copper is inexpensive compared to other noble metals such as silver and is thus advantageous in reducing material cost. In the present embodiment, the metal-organic framework may include only copper ions as its metal ion.

The organic ligands composing the metal-organic framework desirably have one or more carboxylate groups and one or more benzene rings. Examples of the organic ligands include benzene-1,3,5-tricarboxylic acid, 2-hydroxy-1,4-benzenedicarboxylic acid, biphenyl-3,4',5-tricarboxylic acid, biphenyl-3,3',5,5'-tetracarboxylic acid, terphenyl-3, 3",5,5"-tetracarboxylic acid, and 1,3,5-tris(4-carboxyphenyl)benzene. These organic ligands can coordinate to the metal ion to form the metal-organic framework.

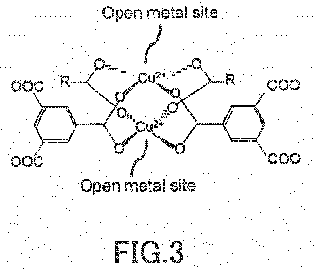

The metal-organic framework desirably has an open metal site. An adsorbable molecule (sulfur compound) can be easily adsorbed onto the open metal site. In one aspect of the open metal site, as shown in FIG. 3, the metal ion is coordinatively unsaturated and there is at least one vacant site in the coordination state of the metal ion. In this case, the adsorbable molecule is interactive with the vacant site. In another aspect of the open metal site, the metal ion is coordinatively saturated and adsorption activity is exhibited owing to, for example, a twist or distortion between the ligands. The metal-organic framework desirably has, in particular, a coordinatively unsaturated open metal site. The coordinatively unsaturated open metal site shows higher activity. In the present embodiment, since it is necessary to have the metal-organic framework adsorb the sulfur compound, pores on the surface of the metal-organic framework are desirably not blocked or covered by another material such as another desulfurizing agent. Blocking the pores on the metal-organic framework by another material inhibits adsorption of a relatively bulky sulfur compound such as TBM, which may cause deterioration of the desulfurization performance.

Most metal-organic frameworks can be synthesized by a known solvothermal method (hydrothermal synthesis). For example, crystals of a metal-organic framework are produced by adding a copper ion source and an organic ligand in a solvent such as dimethylformamide, ethanol, and water and heating the resultant mixture gently under basic conditions. An example of the copper ion source is copper nitrate hydrate. After the synthesis, the resultant product is washed mainly with the solvent used in the synthesis to remove remaining raw materials from the product. A powdery metal-organic framework can be obtained through the subsequent solid-liquid separation and drying.

In the method of the present embodiment, as shown in FIGS. 1 and 2, the desulfurizing agent 22 is placed in the container 20 of the desulfurizer 16 first. Then, the fuel gas supply source and the desulfurizer 16 are connected by a pipe. Next, a fuel gas G is supplied to the desulfurizer 16. It is unnecessary to heat or cool the fuel gas G actively. The temperature of the fuel gas G is approximately the same as the ambient temperature and is, for example, within the range from -15 to 60°C. It is also unnecessary to heat the desulfurizing agent 22 actively. The desulfurizing agent 22 is desirably used at a temperature of 100°C or below. The temperature of the desulfurizing agent 22 is approximately the same as the ambient temperature during operation of the fuel cell system 100 and is, for example, within the range from 45 to 60°C. Keeping the temperature of the desulfurizing agent 22 at 100°C or below can reduce desorption of the adsorbed molecules from the desulfurizing agent 22. The desulfurizing agent 22 is also prevented from structural destruction caused by oxidative decomposition of the organic ligand. In some cases, the container 20 where the desulfurizing agent 22 is placed may be actively cooled in order to keep the temperature of the desulfurizing agent 22 at 100°C or below.

In the method of the present embodiment, the fuel gas pressure at the inlet of the desulfurizer 16 is lower than that in the fuel gas supply source. The fuel gas is supplied from the fuel gas supply source to the desulfurizer 16 without being pressurized. The fuel gas pressure at the inlet of the desulfurizer 16 is, for example, within the range from 2 to 5 kPa. That is, in the present embodiment, desulfurization is carried out at ordinary pressure. According to the present embodiment, therefore, the desulfurizer 16 used can have a simple structure. The configuration of the fuel cell system 100 can be simplified too. Energy needed for pressurization can be saved too.

According to the present embodiment, it is unnecessary to supply hydrogen to the desulfurizer 16. The fuel gas does not include a hydrogen gas substantially, except for a hydrogen gas inevitably introduced. Therefore, the configuration of the fuel cell system 100 of the present embodiment is simpler than that of a conventional fuel cell system employing the hydrodesulfurization process.

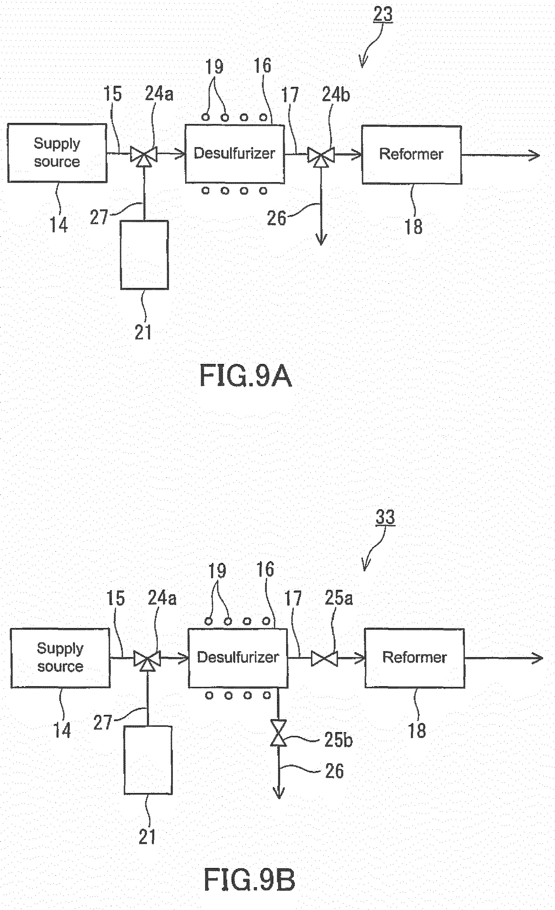

FIG. 9A shows a hydrogen generation apparatus according to a modification. The hydrogen generation apparatus 23 includes a sulfur-containing gas exhaust passage 26 in addition to the components of the hydrogen generation apparatus 13 described with reference to FIG. 1. The sulfur-containing gas exhaust passage 26 branches from a passage 17 connected to the outlet (the outlet 20b of the container 20 shown in FIG. 2) of the desulfurizer 16. The passage 17 is a passage connecting the outlet of the desulfurizer 16 and an inlet of the reformer 18. The sulfur compound can be desorbed from the desulfurizing agent and exhausted out of the hydrogen generation apparatus 23 via the sulfur-containing gas exhaust passage 26.

Specifically, the hydrogen generation apparatus 23 further includes a carrier gas supply source 21, heater 19, passage 27, three-way valve 24a, and three-way valve 24b. The three-way valve 24a is placed on a passage 15. The passage 15 is a passage connecting the supply source 14 and the inlet (the inlet 20a of the container 20 shown in FIG. 2) of the desulfurizer 16. The three-way valve 24b is placed on the passage 17. The passage 17 is a passage connecting the outlet (the outlet 20b of the container 20 shown in FIG. 2) of the desulfurizer 16 and the inlet of the reformer 18. The passage 27 is a passage connecting the carrier gas supply source 21 and the passage 15. In this modification, one end of the passage 27 is connected to the carrier gas supply source 21 and the other end of the passage 27 is connected to the three-way valve 24a. The passage 27 may be directly connected to the desulfurizer 16. The sulfur-containing gas exhaust passage 26 branches from the passage 17. In this modification, the sulfur-containing gas exhaust passage 26 is connected to the three-way valve 24b. The heater 19 is a heater for heating the desulfurizing agent in the desulfurizer 16. The heater 19 is, for example, a resistive heater. The heater 19 may be placed inside the container 20 of the desulfurizer 16. The carrier gas supply source 21 serves to supply the desulfurizer 16 with a carrier gas for promoting the exhaust of the sulfur compound desorbed from the desulfurizing agent. The carrier gas is an inert gas such as a nitrogen gas and noble gas. Each passage consists of at least one pipe.

With the use of the hydrogen generation apparatus 23, the sulfur compound adsorbed on the desulfurizing agent (metal-organic framework) can be desorbed from the desulfurizing agent to recover the desulfurizing agent. Specifically, the three-way valve 24a is operated first to stop the supply of the fuel to the desulfurizer 16 and deliver the carrier gas from the carrier gas supply source 21 to the desulfurizer 16. The three-way valve 24b is operated to deliver the gas exhausted from the desulfurizer 16 to the sulfur-containing gas exhaust passage 26. Next, the heater 19 is turned on to heat the desulfurizer 16. The heating temperature is the interior temperature of the desulfurizer 16 (the temperature of the desulfurizing agent) and is, for example, over 100°C, and is typically 150°C. The upper limit of the heating temperature is not particularly limited as long as the desulfurizing agent is not decomposed. The upper limit of the heating temperature is, for example, 200°C. The sulfur compound is desorbed from the desulfurizing agent upon heating the desulfurizer 16. Simultaneously with the heating, an inert gas is supplied from the carrier gas supply source 21 to the desulfurizer 16 to exhaust the sulfur compound desorbed from the desulfurizing agent out of the hydrogen generation apparatus 23 via the sulfur-containing gas exhaust passage 26. Thus the desulfurizing agent is recovered and the adsorption ability of the desulfurizing agent is regained, which substantially increases the adsorption amount.

FIG. 9B shows a hydrogen generation apparatus according to another modification. In the hydrogen generation apparatus 33, the sulfur-containing gas exhaust passage 26 branches from the desulfurizer 16 (the container 20 shown in FIG. 2). The hydrogen generation apparatus 33 includes on-off valves 25a and 25b in place of the three-way valve 24b shown in FIG. 9A. The on-off valve 25a is placed on the passage 17. The passage 25b is placed on the sulfur-containing gas exhaust passage 26. That is, a three-way valve can be replaced by a plurality of on-off valves. Also in the case of the hydrogen generation apparatus 33 of this modification, the desulfurizing agent can be recovered in accordance with the previously described procedure.

### EXAMPLES

### [Desulfurization test]

### (Test 1)

An amount of 1.1 g of a desulfurizing agent was filled in a fixed-bed flow reactor having a reaction tube with an inner diameter of 7 mm. HKUST-1 (manufactured by BASF) including copper ions and benzene-1,3,5-tricarboxylic acid was used as a desulfurizing agent. Liquefied petroleum gas (LPG) including methyl mercaptan (MM) at a concentration of 100 vol.ppm was made to flow in the reaction tube at a linear velocity of 100 cm/min. The temperature of the desulfurizing agent was kept at 30°C during the test. The concentration of sulfur in the gas exhausted from the reaction tube was measured using a trace sulfur analyzer employing oxidative decomposition-ultraviolet fluorescence method. A sulfur compound was identified by analyzing the gas exhausted from the reaction tube using a gas chromatograph (GC-SCD) equipped with a sulfur chemiluminescence detector. The period of time from when the test started to when the concentration of sulfur in the exhausted gas reached 100 vol.ppb was measured as a "breakthrough time". After the breakthrough time was reached, the weight of the desulfurizing agent was measured and the amount of the adsorbed sulfur compound was calculated. Table 1 shows the result.

### (Test 2)

A CuZnO-based desulfurizing agent (manufactured by Clariant) was used. The breakthrough time was measured and the adsorption amount was calculated in the same manner as in Test 1. The temperature of the desulfurizing agent was kept at 30°C.

**[Table 1]**

| | Fuel | Desulfurizing agent | Temperature (°C) | Breakthrough time (hours) | Adsorption amount relative to weight of desulfurizing agent (wt%) | Adsorption amount relative to weight of Cu (wt%) |
|---|---|---|---|---|---|---|
| Test 1 | LPG | HKUST-1 | 30 | 360 | 10.5 | 32.8 |
| Test 2 | LPG | CuZnO-based | 30 | 55 | 1.6 | 4 |

### [X-ray diffraction measurement]

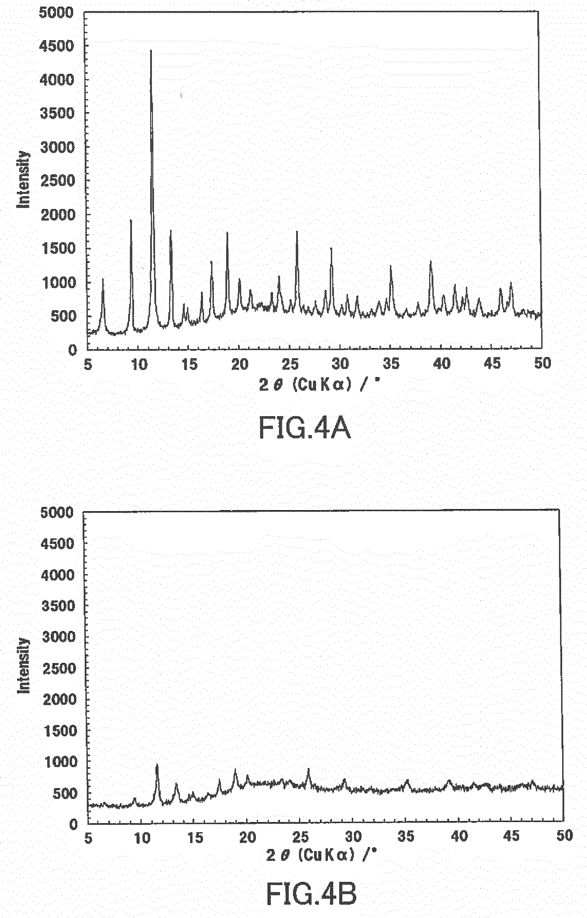

Powder X-ray diffraction measurement was carried out for the HKUST-1 having yet to undergo the desulfurization test and the HKUST-1 having undergone the desulfurization test. FIG. 4A and FIG. 4B show the results.

### [Thermogravimetric and differential thermal analysis (TG-DTA)]

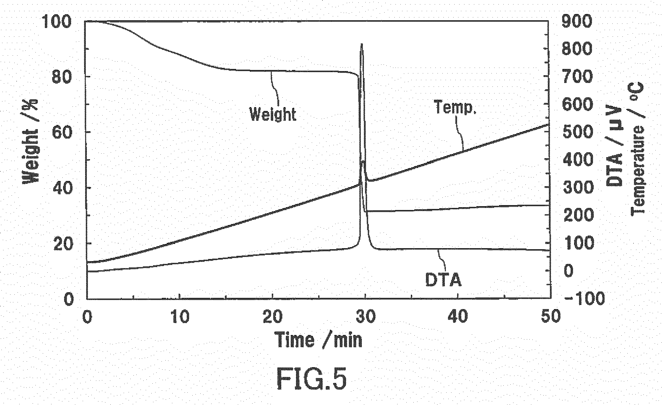

TG-DTA was carried out for the HKUST-1 having yet to undergo the desulfurization test in an air atmosphere at a temperature increase rate of 10°C/min. FIG. 5 shows the result.

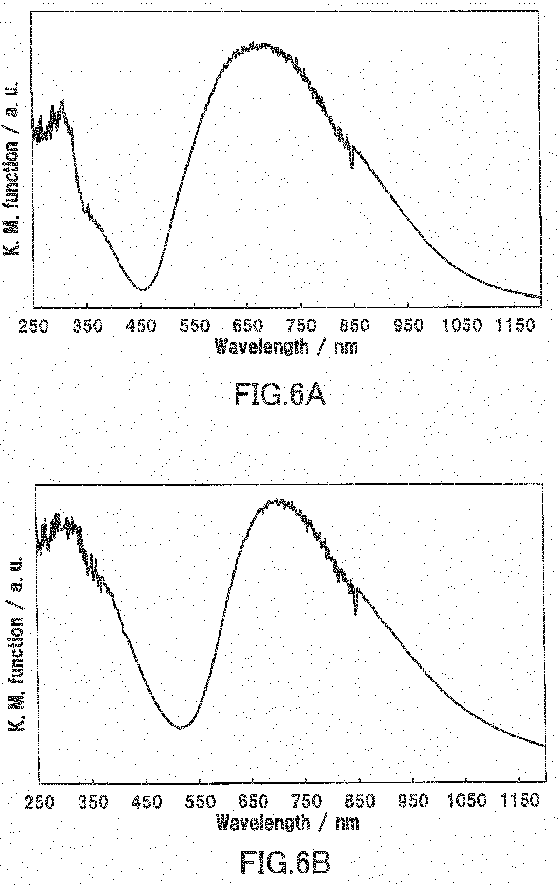

UV-Vis diffuse reflectance spectroscopy was carried out for the HKUST-1 having yet to undergo the desulfurization test and the HKUST-1 having undergone the desulfurization test. FIG. 6A and FIG. 6B show the results.

### [XPS]

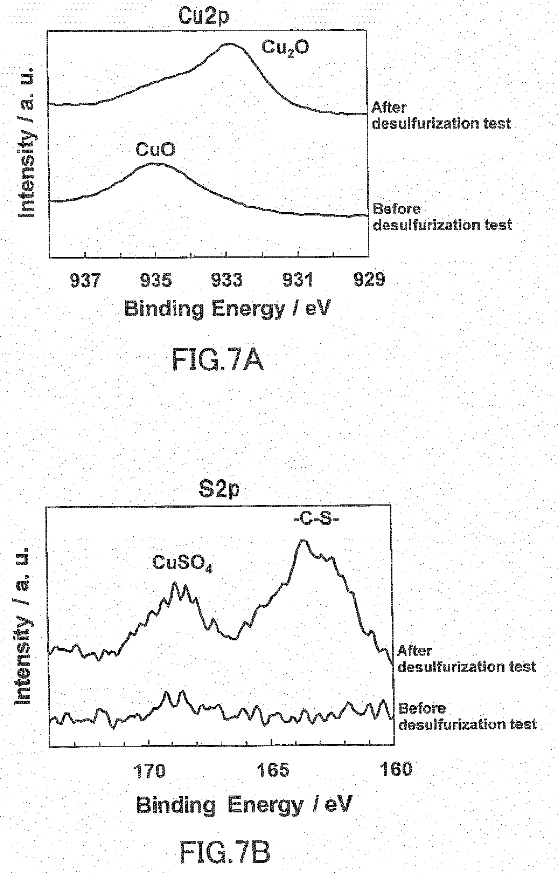

X-ray photoelectron spectroscopy (XPS) was carried out for the HKUST-1 having yet to undergo the desulfurization test and the HKUST-1 having undergone the desulfurization test. FIG. 7A and FIG. 7B show the results. FIG. 7A shows XPS spectra around peaks attributed to Cu2p. FIG. 7B shows XPS spectra around peaks attributed to S2p.

### [Discussion]

As shown in Table 1, the desulfurizing agent HKUST-1 exhibited a considerably higher performance than the CuZnO-based desulfurizing agent (manufactured by Clariant). Specifically, the breakthrough time of the desulfurizing agent HKUST-1 was approximately 6.5 times longer than that of the CuZnO-based desulfurizing agent. The adsorption amount on the desulfurizing agent HKUST-1 (the adsorption amount relative to the weight of the desulfurizing agent) was approximately 6.6 times larger than that on the CuZnO-based desulfurizing agent. That is, the desulfurizing agent HKUST-1 can exert a superior adsorption ability over a longer period of time.

After the breakthrough time, only dimethyl disulfide (DMDS) was detected by the gas chromatograph. This suggests progress of a dimerization reaction of methyl mercaptan molecules. It has been reported that methyl mercaptan molecules are oxidized by oxygen adsorbed on activated carbon to yield DMDS (Non Patent Literature 3). It can be thought that, also in this desulfurization test, the dimerization reaction was caused by skeletal oxygen binding to copper after chemisorption of methyl mercaptan onto each open metal site of Cu, thus yielding DMDS. Additionally, the color of the desulfurizing agent HKUST-1 changed from blue to green through the desulfurization test and was stable for a long time. This also suggests occurrence of the above dimerization reaction.

As shown in FIG. 4A and FIG. 4B, X-ray diffraction patterns did not exhibit any significant difference before and after the desulfurization test. No diffraction peaks derived from copper sulfide were observed, either. This suggests that methyl mercaptan reacted with the copper ions in the structure of the desulfurizing agent HKUST-1 and was trapped at an atomic level. However, the intensity of the X-ray diffraction pattern was consistently reduced after the desulfurization test. This suggests a partial change of the structure of the desulfurizing agent HKUST-1.

As shown in FIG. 5, the DTA curve had its endothermic peak between 300 to 350°C. This endothermic peak is a peak due to oxidative decomposition of the organic ligand. This result also suggests that the use of the desulfurizing agent HKUST-1 at high temperatures should be avoided.

As shown in FIG. 6A and FIG. 6B, absorption edge shifts in the UV-Vis diffuse reflectance spectra occurred as a result of the desulfurization test. Specifically, the absorption edge derived from ligand-to-metal charge transfer (LMCT) derived from electronic transition from oxygen to copper redshifted from 450 nm to 520 nm. The maximum absorption wavelength derived from d-d transition derived from the octahedral structure of copper(II) also redshifted from 690 nm to 710 nm. According to Non Patent Literature 2, these shifts are due to influence of hydration to a carboxylate group. That is, it can be thought that the adsorption of methyl mercaptan induced a partial change of the structure of the metal-organic framework.

As shown in FIG. 7A, before the desulfurization test, the only peak attributed to Cu 2p electrons was the peak around 935 eV derived from the structure (CuO) of the desulfurizing agent. After the desulfurization test, there were peaks attributed to the Cu 2p electrons not only around 935 eV but around 933 eV. The peak around 933 eV can be thought to be a peak derived from Cu₂O. As shown in FIG. 7B, there were no peaks attributed to S 2p electrons before the desulfurization test. After the desulfurization test, a peak derived from CuSO₄ and a peak derived from a C-S bond appeared within the range from 160 eV to 170 eV. These results suggest that dimethyl disulfide was adsorbed onto the metal-organic framework which was the desulfurizing agent in the desulfurization test.

### (Test 3)

An amount of 1.1 g of HKUST-1 (manufactured by BASF, average particle diameter = 20 µm) was filled in a fixed-bed flow reactor having a reaction tube with an inner diameter of 7 mm. City gas (13A) including dimethyl sulfide (DMS) at a concentration of 100 vol.ppm was made to flow in the reaction tube at a linear velocity of 100 cm/min. The temperature of the desulfurizing agent (HKUST-1) was kept at 30°C during the test. The sulfur concentration in the gas exhausted from the reaction tube was measured using a trace sulfur analyzer employing oxidative decomposition-ultraviolet fluorescence method. A sulfur compound was identified by analyzing the gas exhausted from the reaction tube using a gas chromatograph (GC-SCD) equipped with a sulfur chemiluminescence detector. The period of time from when the test started to when the concentration of sulfur in the exhausted gas reached 100 vol.ppb was measured as a "breakthrough time". After the breakthrough time was reached, the weight of the desulfurizing agent was measured to calculate the amount of the adsorbed dimethyl sulfide. Table 2 shows the result.

**[Table 2]**

| | Fuel | Desulfurizing agent | Temperature (°C) | Breakthrough time (hours) | Adsorption amount relative to weight of desulfurizing agent (wt%) | Adsorption amount relative to weight of metal ion (wt%) |
|---|---|---|---|---|---|---|
| Test 3 | City gas | HKUST-1 | 30 | 430 | 13 | 41.3 |
| Test 4 | City gas | MIL-53 | 30 | 0 | 0 | 0 |
| Test 5 | City gas | Ag zeolite | 30 | 100 | 3 | 20 |

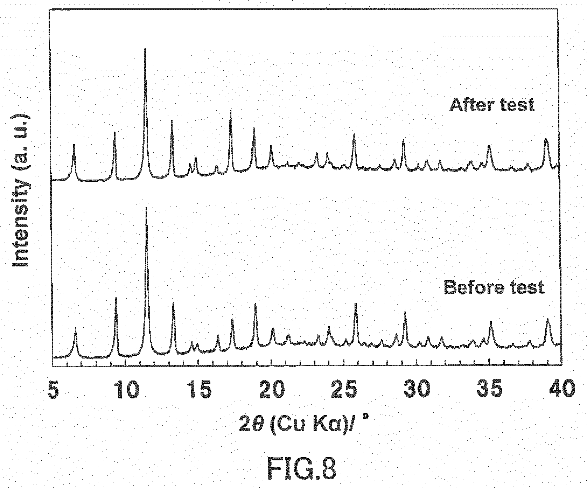

The amount of dimethyl sulfide adsorbed on the desulfurizing agent was 13 wt%. As shown in FIG. 8, the structure and intensity of the X-ray diffraction patterns did not exhibit any significant difference before and after the desulfurization test. That is, dimethyl sulfide was adsorbed onto the desulfurizing agent HKUST-1 without destroying the structure of the desulfurizing agent HKUST-1. This result suggests that the desulfurizing agent HKUST-1 exerts a higher effect in removal of dimethyl sulfide than in removal of methyl mercaptan (Test 1).

### (Test 4)

MIL-53 (manufactured by BASF) consisting of aluminum ions and terephthalic acid was used. The breakthrough time was measured and the adsorption amount was calculated in the same manner as in Test 3. The adsorption amount was 0 wt% in Test 4. This result suggests that copper ions are effective in adsorbing dimethyl sulfide which is a sulfide compound.

### (Test 5)

Ag zeolite was used as a desulfurizing agent. The breakthrough time was measured and the adsorption amount was calculated in the same manner as in Test 3. The adsorption amount was 3 wt% in Test 5.

### INDUSTRIAL APPLICABILITY

According to the technique disclosed in this specification, a sulfur compound included in a fluid can be removed from the fluid easily and effectively over a long period of time. The technique disclosed in this specification is useful for, for example, a desulfurizer, hydrogen generation apparatus, fuel cell system, and deodorization apparatus.

## Claims

1. A method for removing a sulfide compound from a fluid comprising the sulfide compound, the method comprising bringing the fluid into contact with a metal-organic framework having a copper ion and an organic ligand.

2. The method according to claim 1, wherein the sulfide is dimethyl sulfide.

3. The method according to claim 1 or 2, wherein the fluid further comprises a hydrocarbon fuel.

4. The method according to any one of claims 1 to 3, wherein the metal-organic framework has a coordinatively unsaturated open metal site.

5. The method according to any one of claims 1 to 4, wherein the organic ligand has a carboxylate group and a benzene ring.

6. The method according to any one of claims 1 to 5, wherein a temperature of the metal-organic framework is kept at 100°C or below.

7. The method according to any one of claims 1 to 6, wherein
the fluid is a fuel gas comprising a hydrocarbon fuel, and
the fuel gas is not pressurized on a passage from a predetermined fuel gas supply source to a desulfurizer containing the metal-organic framework.

8. The method according to any one of claims 1 to 7, further comprising heating the metal-organic framework to a temperature over 100°C and desorbing the sulfide compound adsorbed on the metal-organic framework from the metal-organic framework to recover the metal-organic framework.

9. A hydrogen generation apparatus comprising:
a supply source of a fuel comprising dimethyl sulfide as an odorant;
a desulfurizer connected to the supply source; and
a reformer connected to the desulfurizer to generate hydrogen from the fuel treated by the desulfurizer, wherein
the desulfurizer has a container having an inlet and an outlet and a desulfurizing agent filled in the container, and
the desulfurizing agent comprises a metal-organic framework having a copper ion and an organic ligand,

10. The hydrogen generation apparatus according to claim 9, wherein
the fuel further comprises a hydrocarbon gas, and
the reformer is a device that generates hydrogen from the hydrocarbon gas by steam reforming.

11. The hydrogen generation apparatus according to claim 9 or 10, further comprising a sulfur-containing gas exhaust passage branching from the container of the desulfurizer or branching from a passage connected to the outlet of the container of the desulfurizer.

12. A fuel cell system, comprising:
the hydrogen generation apparatus according to any one of claims 9 to 11; and
a fuel cell that generates electricity using hydrogen produced by the hydrogen generation apparatus.
